# EUROPEAN PATENT APPLICATION

(11) **EP 2 610 536 A2**
(43) Date of publication of application: **03.07.2013**
(21) Application number: 12173628.4
(22) Date of filing: 26.06.2012
(51) Int. Cl.: F16L 11/08

(54) **Flexible pipe body and method**

(30) Priority: 29.12.2011 GB 201122438
(71) Applicant: Wellstream International Limited, Tyne and Wear NE6 3PF (GB)
(72) Inventor: Karabelas, George, Newcastle-Upon-Tyne, Tyne and Wear NE6 3PF (GB); Burton, Andrew, Newcastle-Upon-Tyne, Tyne and Wear NE6 3PF (GB); Graham, Geoffrey Stephen, Newcastle-Upon-Tyne, Tyne and Wear NE6 3PF (GB)
(74) Representative: Harrison Goddard Foote LLP

(57) **Abstract**

A flexible pipe body (300) and method of manufacturing a flexible pipe body are disclosed. The pipe body includes a flexible pipe body, comprising: a tubular layer for forming a collapse resistant layer (304), the layer comprising corrugations (308), the layer having a radially inner surface and a radially outer surface, and each of the radially inner and radially outer surfaces having at least one groove (318)provided therein, and at least one reinforcing element provided at least partially within the groove of at least one of the radially outer surface and the radially inner surface.

## Description

The present invention relates to a flexible pipe body and a method of providing the same. In particular, but not exclusively, the present invention relates to a flexible pipe body for transporting oil and gas that includes a collapse resistant layer including a corrugated form for improved flexibility and stability.

Traditionally flexible pipe is utilised to transport production fluids, such as oil and/or gas and/or water, from one location to another. Flexible pipe is particularly useful in connecting a sub-sea location (which may be deep underwater, say 1000 metres or more) to a sea level location. The pipe may have an internal diameter of typically up to around 0.6 metres. Flexible pipe is generally formed as an assembly of a flexible pipe body and one or more end fittings. The pipe body is typically formed as a combination of layered materials that form a pressure-containing conduit. The pipe structure allows large deflections without causing bending stresses that impair the pipe's functionality over its lifetime. The pipe body is generally built up as a combined structure including metallic and polymer layers.

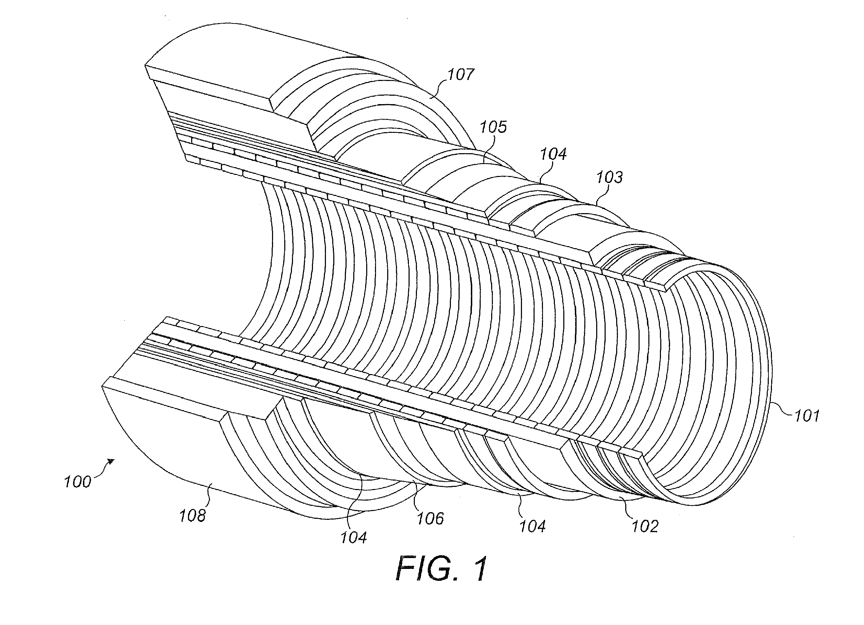

Throughout this description, reference will be made to a flexible pipe. It will be understood that a flexible pipe is an assembly of a portion of a pipe body and one or more end fittings in each of which a respective end of the pipe body is terminated. Fig. 1 illustrates how pipe body 100 may be formed from a combination of layered materials that form a pressure-containing conduit. Although a number of particular layers are illustrated in Fig. 1, it is to be understood that the present invention is broadly applicable to coaxial pipe body structures including two or more layers manufactured from a variety of possible materials. The layer thicknesses are shown for illustrative purposes only.

As illustrated in Fig. 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and tensile armour pressure and mechanical crushing loads.

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath is often referred to by those skilled in the art as a barrier layer. In operation without such a carcass (so-called smooth bore operation) the internal pressure sheath may be referred to as a liner.

An optional pressure armour layer 103 is a structural layer with a lay angle close to 90° that increases the resistance of the flexible pipe to internal and external pressure and mechanical crushing loads. The layer also structurally supports the internal pressure sheath, and typically consists of an interlocked construction.

The primary load on such pressure armour layer is formed from radial forces. Pressure armour layers often have a specific cross section profile to interlock so as to be able to maintain and absorb radial forces resulting from outer or inner pressure on the pipe. The cross sectional profile of the wound wires which thus prevent the pipe from collapsing or bursting as a result of pressure are sometimes called pressure-resistant profiles. When pressure armour layers are formed from helically wound wired forming hoop components, the radial forces from outer or inner pressure on the pipe cause the hoop components to expand or contract, putting a tensile load on the wires.

The flexible pipe body also includes an optional first tensile armour layer 105 and optional second tensile armour layer 106. Each tensile armour layer is a structural layer with a lay angle typically between 10° and 55°. Each layer is used to sustain tensile loads and internal pressure. The tensile armour layers are often counter-wound in pairs.

The primary loading on such tensile armour layer is tension. In high pressure applications, such as in deep and ultra deep water environments, the tensile armour layer experiences high tension loads from a combination of the internal pressure end cap load and the self-supported weight of the flexible pipe. This can cause failure in the flexible pipe since such conditions are experienced over prolonged periods of time.

The flexible pipe body shown also includes optional layers of tape 104 which help contain underlying layers and to some extent prevent abrasion between adjacent layers.

The flexible pipe body also typically includes optional layers of insulation 107 and an outer sheath 108, which comprises a polymer layer used to protect the pipe against penetration of seawater and other external environments, corrosion, abrasion and mechanical damage.

Each flexible pipe comprises at least one portion, sometimes referred to as a segment or section of pipe body 100 together with an end fitting located at at least one end of the flexible pipe. An end fitting provides a mechanical device which forms the transition between the flexible pipe body and a connector. The different pipe layers as shown, for example, in Fig. 1 are terminated in the end fitting in such a way as to transfer the load between the flexible pipe and the connector.

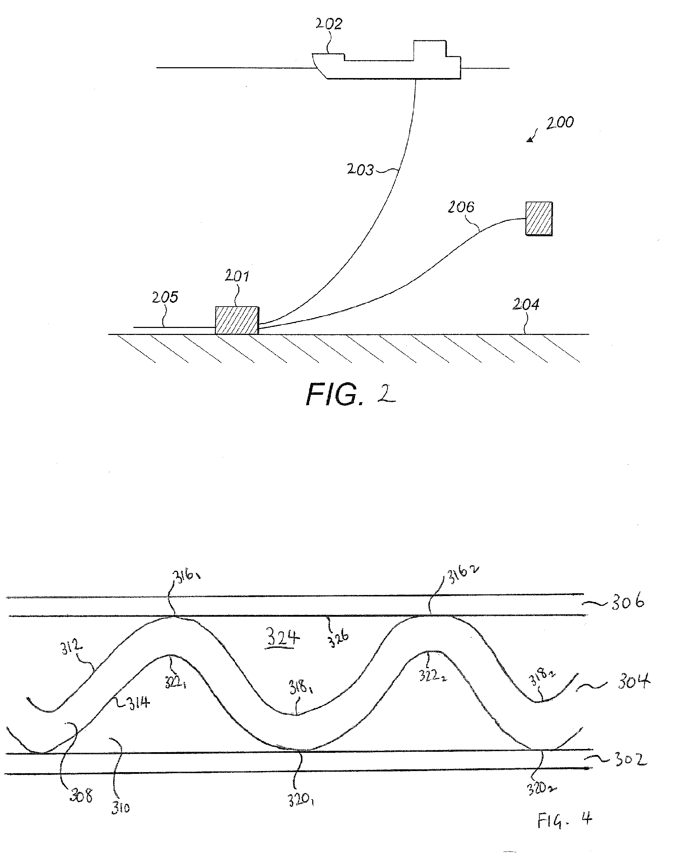

Fig. 2 illustrates a riser assembly 200 suitable for transporting production fluid such as oil and/or gas and/or water from a sub-sea location 201 to a floating facility 202. For example, in Fig. 2 the sub-sea location 201 includes a sub-sea flow line. The flexible flow line 205 comprises a flexible pipe, wholly or in part, resting on the sea floor 204 or buried below the sea floor and used in a static application. The floating facility may be provided by a platform and/or buoy or, as illustrated in Fig. 2, a ship. The riser assembly 200 is provided as a flexible riser, that is to say a flexible pipe 203 connecting the ship to the sea floor installation. The flexible pipe may be in segments of flexible pipe body with connecting end fittings.

It will be appreciated that there are different types of riser, as is well-known by those skilled in the art. Embodiments of the present invention may be used with any type of riser, such as a freely suspended (free, catenary riser), a riser restrained to some extent (buoys, chains), totally restrained riser or enclosed in a tube (I or J tubes).

Fig. 2 also illustrates how portions of flexible pipe can be utilised as a flow line 205 or jumper 206.

Unbonded flexible pipe has been used for deep water (less than 3,300 feet (1,005.84 metres)) and ultra deep water (greater than 3,300 feet) developments. It is the increasing demand for oil which is causing exploration to occur at greater and greater depths where environmental factors are more extreme. For example in such deep and ultra-deep water environments ocean floor temperature increases the risk of production fluids cooling to a temperature that may lead to pipe blockage. Increased depths also increase the pressure associated with the environment in which the flexible pipe must operate. As a result the need for high levels of performance from the layers of the flexible pipe body is increased.

Flexible pipe may also be used for shallow water applications (for example less than around 500 metres depth) or even for shore (overland) applications.

One way to improve the load response and thus performance of armour layers and collapse resistant layers is to manufacture the layers from thicker and stronger and thus more robust materials. For example for pressure armour layers in which the layers are often formed from wound wires with adjacent windings in the layer interlocking, manufacturing the wires from thicker material results in the strength increasing appropriately. However as more material is used the weight of the flexible pipe increases. Ultimately the weight of the flexible pipe can become a limiting factor in using flexible pipe. Additionally manufacturing flexible pipe using thicker and thicker material increases material costs appreciably, which is also a disadvantage.

In addition, it is known that transportation of production fluids often leads to various layers of the flexible pipe being subject to relatively acidic conditions. Such "sour" service is due to the migration of hydrogen sulphide (H₂S) along with other species, such as CO₂, from the internal bore of the pipe radially outwards. This is a result of some production fluids containing relatively high concentrations of hydrogen sulphide gas in solution or in gaseous form. Under such circumstances over time hydrogen sulphide and the other gas species such as CO₂ permeate through the fluid retaining layer into annulus regions defined between layers of the flexible pipe body. The H₂S and CO₂ collect in these annular regions and gradually increase the acidity (reduce pH) of the environment in those regions. Metal components, for example the tapes forming the pressure armour layer and/or tensile armour layer in those annular regions, are thus subjected to acid enhanced corrosion, which, if not mitigated, could lead to extremely high corrosion rates and possibly failure. It will also be appreciated that end fittings potentially include many metallic component parts, and could equally be subjected to an acid environment.

Such a sour service environment can affect the overall performance of a flexible pipe over time. This can lead to a reduced lifetime expectation or even failure of the flexible pipe during use. A known technique is to use "sour service materials" for potentially vulnerable components of the flexible pipe. This typically involves the use of a wire that has undergone hot/cold working (controlled heating/cooling treatments) during manufacture, and/or has had corrosion resistant additives added. These sour wires are more costly than standard, non-worked wires (so called "sweet" wires for use in non-acidic environments). The sour wires are also weaker than sweet wires, meaning more material is needed to compensate for the wire's reduction in strength.

Corrugated layers are known per se for improving strength of a tube or pipe. US6,186,181 discloses a flexible line pipe including an inner and outer corrugated metal tube. However, a corrugated layer is known to be torsionally unstable. Furthermore, spirally wound collapse resistant layers can also be torsionally unstable, although they can be useful for wrapping additional elements into the pipe body, such as an optical fibre, for example. In addition, multiple discrete ring elements have been proposed, which are torsionally stable, though are less adaptable for wrapping additional elements into.

In addition, it is known that when pressure is applied to a corrugated tube or pipeline, such as pressure from fluid flowing through the bore, that corrugated structure will have a tendency to extend in length to the detriment of the performance of a multi-layered flexible pipe, since layers may separate and fail to support each other. The strength of the corrugated layer would also decrease.

According to a first aspect of the present invention there is provided a flexible pipe body, comprising:
a tubular layer for forming a collapse resistant layer, the layer comprising corrugations, the layer having a radially inner surface and a radially outer surface, and each of the radially inner and radially outer surfaces having at least one groove provided therein, and
at least one reinforcing element provided at least partially within the groove of at least one of the radially outer surface and the radially inner surface.

According to a second aspect of the present invention there is provided a method of manufacturing a flexible pipe body, comprising:
providing a tubular layer for forming a collapse resistant layer, the layer comprising corrugations, the layer having a radially inner surface and a radially outer surface, and each of the radially inner and radially outer surfaces having at least one groove provided therein, and
filling the groove of at least one of the radially outer surface and the radially inner surface at least partially with at least one reinforcing element.

According to a third aspect of the present invention there is provided a flexible pipe body substantially as herein described with reference to the drawings.

According to a fourth aspect of the present invention there is provided a method substantially as herein described with reference to the drawings.

Certain embodiments of the invention provide the advantage that a flexible pipe body is provided including a collapse resistant layer with increased flexibility.

Certain embodiments of the invention provide the advantage that a flexible pipe body is provided including a collapse resistant layer that is capable of withstanding high pressures.

Certain embodiments of the invention provide the advantage that a flexible pipe body is provided that is light weight in design.

Certain embodiments of the invention provide the advantage that a collapse resistant layer is provided with the flexibility of a corrugated formation, yet is more stable than known designs.

Certain embodiments of the invention provide the advantage that a collapse resistant layer is provided with the benefits of a corrugated formation, yet having a substantially smooth surface for overlaying further layers or acting as a smooth bore inner surface of a flexible pipe body.

Certain embodiments of the invention provide the advantage that a corrugated pipe layer is provided that is supported in both the radial and axial directions. Certain embodiments provide a pipe layer that is radially and axially supported, yet allows a degree of movement by the pipe to enable an allowable tolerance of a predetermined maximum bending capability.

Embodiments of the invention are further described hereinafter with reference to the accompanying drawings, in which:
Fig. 1 illustrates a flexible pipe body;
Fig. 2 illustrates a riser assembly;
Fig. 3 illustrates a flexible pipe body;
Fig. 4 illustrates a cross section of the flexible pipe body of Fig. 3 in the plane A;
Fig. 5 illustrates a method of manufacturing a flexible pipe body;
Fig. 6 illustrates a cross-section of another flexible pipe body;
Fig. 7 illustrates a side view of the pipe body of Fig. 6;
Figs. 8 and 9 illustrate a cross-section of yet another flexible pipe body.

In the drawings like reference numerals refer to like parts.

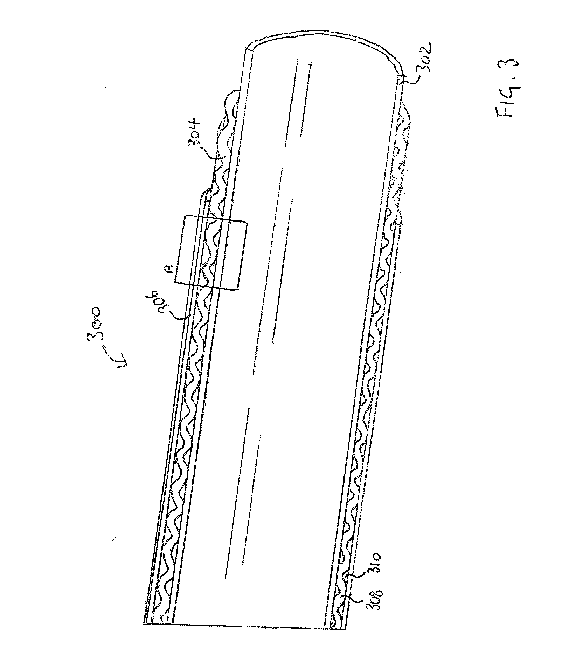

Figs. 3 and 4 illustrate a flexible pipe body 300 according to an embodiment of the present invention. Fig. 4 is an enlarged, cross sectional view of the pipe body in the plane A indicated in Fig. 3.

The pipe body 300 includes a collapse resistant layer 304 that is formed from a layer of corrugated material 308 and a filler material 310, in this case provided on both sides of the corrugated material 308. The filler material 310 could however be provided on only one side of the corrugated material.

The corrugated layer 308 has a corrugated profile having an outer surface 312 and an inner surface 314. The outer surface 312 has multiple ridges 316_{1,2} and grooves 318_{1,2}. The ridges 316_{1,2} are the peaks of the corrugated layer that define the radially outermost part of the layer 304. The inner surface 314 has multiple ridges 320_{1,2} and grooves 322_{1,2}. The ridges 320_{1,2} are the peaks of the corrugated layer that define the radially innermost part of the layer 304. A corrugated layer having different width and pitch etc. to that shown could of course be used. In this example, each groove of the outer surface corresponds to a ridge of the inner surface and each ridge of the outer surface corresponds to a groove of the inner surface. In this example the grooves and ridges are repeated along the axial direction of the flexible pipe body. Alternatively the grooves and ridges could be formed to repeat in a helical direction along the longitudinal axis of the flexible pipe body.

The filler material 310 is provided to substantially fill the void extending between adjacent grooves and ridges on each of the inner and outer surfaces 312,314. That is, in the cross section shown in Fig. 4, the filler material fills the region 324 that has an approximately inverted triangular shape, between ridge 316₁, groove 318₁ and ridge 316₂. Aptly, all other regions between the adjacent grooves and ridges on that side of the corrugated layer will be filled in the same manner. The region 324 has a substantially flat upper surface 326 as shown in the cross section of Fig. 4. Thus in the pipe body layer 304 the radially outer surface of layer 304 will be substantially smooth (non-undulating).

In this example, the regions of the layer 304 between adjacent grooves and ridges of the inner surface 314 of the corrugated layer 308 are also substantially filled with filler material 310 in the same manner as described above, though of course in the cross section the filled region will have an approximately triangular shape rather than an inverted triangular shape.

In this example the filler material 310 is a rubber, having a Poisson's ratio of around 0.5 Aptly, the filler material has a Poisson's ratio of between around 0.45 to 0.55. This material can be described as a constant volume material.

The pipe body 300 shown includes an optional innermost polymer wear layer 302. Such a wear layer may be useful in reducing flow resistance through the bore, i.e. providing a smoother layer unlikely to be damaged by fluid flow in use.

The pipe body 300 shown also includes an optional extruded polymer layer 306, which may be useful in providing a base layer for any outer layers, such as a pressure armour layer, to be applied to. The layer 306 helps to provide creep resistance even under high pressure and helps to ensure a smooth surface for applying any outer layer.

The pipe body 300 may optionally include further layers, such as a pressure armour layer, a tensile armour layer, an outer sheath, which can be applied in the usual manner as is known in the art.

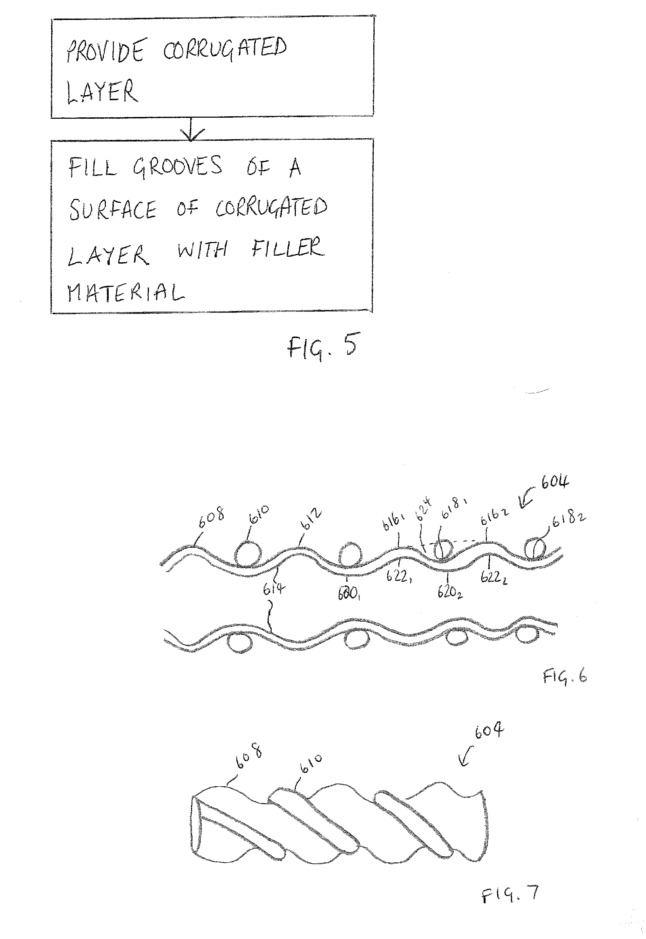

A method of manufacturing a flexible pipe body according to an aspect of the present invention is shown in Fig. 5. In a first step, a corrugated layer is provided, such as the layer 308 shown in Fig. 3. Then, grooves of a surface of the corrugated layer are filled with a filler material, such as the filler 310 shown in Fig. 3, to provide a substantially smooth surface. This may be achieved by inserting a preformed body of filler material into the grooves, mechanically or manually, or wrapping a tape (of relatively thinner diameter than the groove) around the groove region until the groove is substantially filled. The corrugated layer may be provided as a tubular layer over a mandrel, or over another layer of a flexible pipe body. Further layers of flexible pipe body may also be added adjacent the formed layer.

In a further embodiment of the present invention, the corrugated layer may be formed of a metal, such as stainless steel. The remaining features of the invention may be provided as described above. By providing the corrugated layer of metal, the layer acts as an impermeable layer.

A yet further embodiment of the present invention will now be described with reference to Figs. 6 and 7. Fig. 6 illustrates a cross-section of a portion of flexible pipe body. Fig. 7 is side view of the same portion of pipe body.

The pipe body includes a collapse resistant layer 604 that includes a layer of corrugated material 608 and an elongate tape element, in this case a metallic wire 610, which here is provided on the radially outer side of the corrugated material 608. The wire 610 could however be provided on both sides of the corrugated material.

The corrugated layer 608 has a corrugated profile having an outer surface 612 and an inner surface 614. The outer surface 612 has, in cross-section, multiple ridges 616_{1,2} and grooves 618_{1,2}. The ridges 616_{1,2} are the peaks of the corrugated layer that define a radially outermost part of the layer 604. The inner surface 614 has, in cross-section, multiple ridges 620_{1,2} and grooves 622_{1,2}. The ridges 620_{1,2} are the peaks of the corrugated layer that define a radially innermost part of the layer 604. A corrugated layer having different width and pitch etc. to that shown could of course be used. In this example, each groove of the outer surface corresponds to a ridge of the inner surface and each ridge of the outer surface corresponds to a groove of the inner surface. In this example the grooves and ridges extend helically along the longitudinal axis of the flexible pipe body, as shown in Fig. 7. As such, on the outer surface of the layer 608, there is actually a single groove that extends along the length. The helix is shown in Fig. 7 to extend at an angle of around 45 degrees, but the helix could be provided at any angle, such as 5 degrees to 85 degrees to the longitudinal axis of the pipe.

The wire 610 has a substantially circular cross-section and is provided to significantly fill the void extending between adjacent grooves and ridges on the outer surface 612. That is, in the cross section shown in Fig. 6, the wire significantly fills the region 624 that has an approximately inverted triangular shape, between ridge 616₁, groove 618₁ and ridge 616₂. The region 624 could alternatively be termed a groove or grooved region.

Since the groove of the corrugated layer extends helically along the length of the pipe body, the wire 610 can be provided to locate in the groove and extend along the layer. Aptly, the wire 610 may be affixed at the ends of the pipe body to an end fitting, which will help prevent the wire from detaching from the corrugated layer.

A function of the elongate tape element such as the wire 610 is to act as a reinforcing element to locate axially and radially in the groove(s) of the corrugated layer. The tape element therefore supports the corrugated layer in a radial direction and in an axial direction. The tape element also allows a degree of movement of the pipe body, such as the bending that may be experienced in use under the sea. The allowable degree of bending can be determined by a person skilled in the art and the pipe body can be designed to match a maximum allowable degree of bending by consideration of the angle extending between the elongate tape element and the wall of the groove of the corrugated layer.

In this example the wire 610 is of stainless steel. However, any other material may be used to give reinforcing strength to the corrugated layer, such as composite or other high strength metal alloy, and with any suitable cross section, such as oval or triangular for example.

The remaining layers of flexible pipe body may be provided, where necessary, as described in relation to Figs. 3 and 4. For example, a wear layer may optionally be provided on one or both sides of the layer 604.

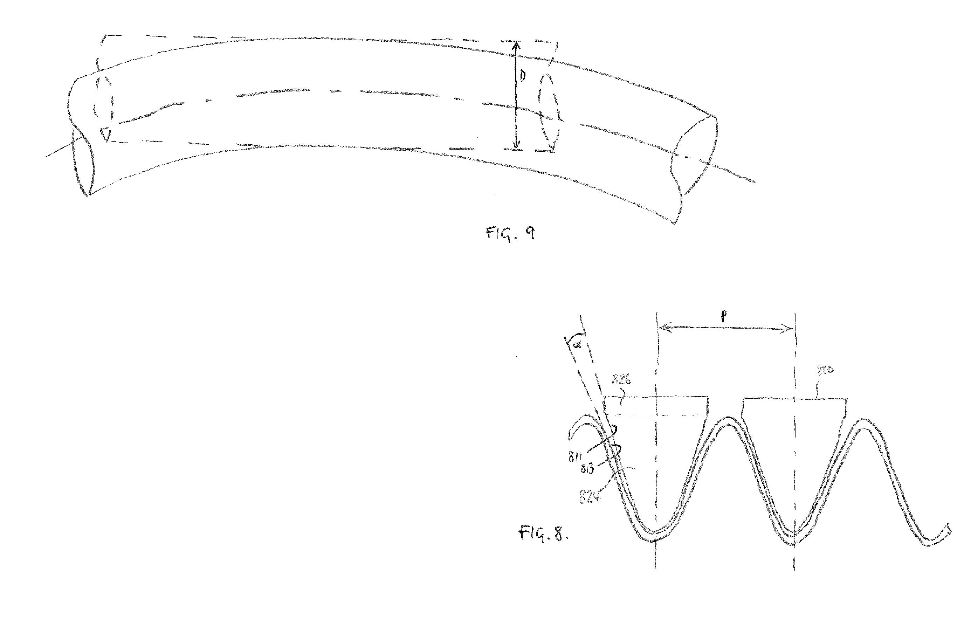

A yet further embodiment of the present invention will now be described with reference to Figs. 8 and 9. Fig. 8 shows a cross-section of a small portion of flexible pipe body, in a plane similar to the plane A of Fig. 3. The embodiment of Fig. 8 is similar to the embodiment described with respect to Figs. 6 and 7. However, in this embodiment the elongate tape element has another specifically shaped cross-section. As shown, the tape element 810 has a cross-section shaped to substantially fill the grooved area 824 and to extend further radially outwards of the grooved area. The tape element 810 has an approximate triangular shaped cross-section having a body 826 extending out radially further than the groove area 824. The cross-section of the body 826 is dimensioned such that a body from a first winding of the helically wrapped tape element does not meet the body from an adjacent winding, when the tubular layer is positioned in its usual, straight form (shown in dashed lines in Fig. 9). The angle (gap) α between the edge of the tape element 811 and the edge of the grooved area 813 may be calculated by a person skilled in the art to give a maximum bending radius angle of the pipe body. That is, when a pipe body bends (as shown in Fig. 9), at the inner side of the bend (i.e. the more acute side), the windings will become closer, and may eventually touch. Therefore, that angle α can be calculated (via trigonometry using the pitch P of the corrugations, the diameter D of the pipe, etc.) to allow a maximum given bend radius, in accordance with the requirements of the specific usage.

Other features of the embodiment of Fig. 8 may be as described above with respect to Figs 6 and 7, and/or with respect to Figs. 3 and 4. The tape element may be a unitary piece, or several coupled pieces.

With the above described invention, the corrugated layer provides flexibility to a collapse resistant layer of a flexible pipe body, yet is more stable than known corrugated tubing, which can be torsionally unstable.

Using a corrugated material as part of the pipe body leads to a smaller amount of strain experienced by the layer as the flexible pipe body undergoes bending in use, compared to a standard, non-corrugated cylindrical type of layer. This is because, for a section of corrugated pipe layer, the ratio of increased length after bending to length without bending will be small. I.e. the change in length after bending will be less for a corrugated layer than for a non-corrugated layer.

By including the filler material having a constant volume on at least one side of the corrugated layer, this allows the layer to bend sufficiently, and also provides support to an adjacent layer by forming a relatively smooth surface. That is, the filler material prevents a point contact between the peaks of the corrugations and the adjacent layer. This is particularly useful when there is internal or external pressure acting on such a layer or pressure from bending of the pipe body, pushing the layers radially together.

In addition, the corrugated layer may be used in place of a standard carcass layer to provide collapse resistance, yet having a filler material provided on the radially innermost face of the corrugated layer will provide a smooth bore type surface, hence giving the benefits of a collapse resistant layer as well as a smooth bore finish.

Furthermore, the filler material may provide an insulating effect to the pipe body, which is always useful when operating in extreme conditions such as deep under the sea.

Providing the corrugated layer of a composite material allows bending of the layer, which non-corrugated composite layers cannot easily achieve.

By providing the corrugated layer of a metal, the layer becomes impermeable to liquid and gases in particular, which can gradually migrate through polymer barrier layers for example causing an unwanted pressure build up in the annulus region between the polymer barrier layer and an outer shield layer. The metal corrugated layer prevents such fluid migration, but also allows bending, which non-corrugated metal layers cannot. These features enable the benefit of so called "sweet" wires to be used in a "sour" service environment.

By providing the corrugated layer to have a filler material or tape element acting as a reinforcing element, even when the flexible pipe body experiences pressurisation, particularly from within the bore of the pipe body, the corrugated material will be prevented from extending lengthways in its natural manner.

Various modifications to the detailed designs as described above are possible. For example, although it is described above in respect of the embodiment of Figs. 3 and 4 to apply a constant volume material to the grooves of a corrugated layer to reach the ridges of that layer to provide a smooth surface, a larger amount of the constant volume material could be applied so as to fill and extend outwards to some degree from the corrugated layer.

Although the collapse resistant layer has been described above as a carcass-type layer, the layer could also be used as a pressure armour layer, fluid barrier layer, or other layer of a flexible pipe body. In addition, the collapse resistant layer may be used as a combined carcass and barrier layer for example, or as another combination of layers in a flexible pipe body.

Any of the various materials described above for any of the layers may be polymer, a composite material, metal or alloy, or other material suitable for the specific application.

The filler material may be any suitable material having a Poisson's ratio of around 0.45 to 0.55, such as silicone for example. Rather than unitary bodies of filler material filling each region between grooves and ridges, it is possible to use a tape of rubber or silicone material that is wound around the region of the corrugation to thereby fill the region.

The above-described embodiment of Figs. 6 and 7 has a single helical groove in the corrugated layer. However, two or more helical grooves may alternatively be used in the corrugated layer, at any chosen angle. Alternatively, corrugated material having parallel grooves lying perpendicular to the longitudinal axis of the pipe may be used, with discrete hoops of wire or other reinforcing material filling the grooves. In this case it is not necessary to affix the hoops of wire to the corrugated layer.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

The disclosure further includes the subject matter as described below in the following paragraphs.
Paragraph 1. Flexible pipe body, comprising:
   a tubular layer of corrugated material for forming a collapse resistant layer, wherein a radially outer surface of the layer has alternately repeating grooves and ridges, and a radially inner surface of the layer has respective alternately repeating ridges and grooves, and
   a filler element provided adjacent the grooves of at least one of the radially outer surface and the radially inner surface, such that for the said surface, the filler element substantially fills a void extending between adjacent grooves and ridges, thereby providing a substantially non-undulating surface along the ridges.
Paragraph 2. Flexible pipe body as in paragraph 1 wherein the grooves and ridges are repeated in the axial direction of the tubular layer.
Paragraph 3. Flexible pipe body as in paragraph 1 wherein the grooves and ridges are repeated in a helical direction along the longitudinal axis of the tubular layer.
Paragraph 4. Flexible pipe body as in any preceding paragraph wherein the filler element comprises a material having a Poisson's ratio of between around 0.45 to 0.55.
Paragraph 5. Flexible pipe body as in paragraph 4 wherein the filler element comprises a material having a Poisson's ratio of between around 0.5.
Paragraph 6. Flexible pipe body as in paragraph 4 or 5 wherein the filler element comprises a rubber.
Paragraph 7. Flexible pipe body as in paragraph 4 or 5 wherein the filler element comprises a silicone.
Paragraph 8. Flexible pipe body as in any preceding paragraph wherein the filler element comprises a wound tape.
Paragraph 9. Flexible pipe body as in any preceding paragraph wherein the tubular layer comprises metal.
Paragraph 10. Flexible pipe body as in any of paragraphs 1 to 8 wherein the tubular layer comprises a composite material.
Paragraph 11. Flexible pipe body as in any preceding paragraph wherein the tubular layer forms a fluid barrier layer.
Paragraph 12. Flexible pipe body as in any of paragraphs 1 to 10 wherein the tubular layer forms a pressure retaining armour layer.
Paragraph 13. Flexible pipe body as in any of paragraphs 1 to 10 wherein the tubular layer forms a carcass layer.
Paragraph 14. A method of manufacturing a flexible pipe body, comprising:
   providing a tubular layer of corrugated material for forming a collapse resistant layer, wherein a radially outer surface of the layer has alternately repeating grooves and ridges, and a radially inner surface of the layer has respective alternately repeating ridges and grooves, and
   filling the grooves of at least one of the radially outer surface and the radially inner surface with a filler element, such that for the said surface, the filler element substantially fills a void extending between adjacent grooves and ridges, thereby providing a substantially non-undulating surface along the ridges.
Paragraph 15. A method as in paragraph 14 wherein the filler element comprises a material having a Poisson's ratio of between around 0.45 to 0.55.
Paragraph 16. A method as in paragraph 15 wherein the filler element comprises a rubber or a silicone.
Paragraph 17. A method as in any of paragraphs 14 to 16 wherein the step of filling the grooves comprises winding a tape into the void.
Paragraph 18. A method as in any of paragraphs 14 to 17 further comprising providing a further layer adjacent the substantially non-undulating surface.
Paragraph 19. Flexible pipe body substantially as hereinbefore described with reference to the accompanying drawings.
Paragraph 20. A method substantially as hereinbefore described with reference to the accompanying drawings.

## Claims

1. Flexible pipe body, comprising:
a tubular layer for forming a collapse resistant layer, the layer comprising corrugations, the layer having a radially inner surface and a radially outer surface, and each of the radially inner and radially outer surfaces having at least one groove provided therein, and
at least one reinforcing element provided at least partially within the groove of at least one of the radially outer surface and the radially inner surface.

2. Flexible pipe body as claimed in claim 1 wherein each of the radially inner and outer surfaces has a single groove helically extending along the length of the tubular layer to form the corrugations.

3. Flexible pipe body as claimed in claim 1 wherein each of the radially inner and outer surfaces has a plurality of grooves helically extending along the length of the tubular layer to form the corrugations.

4. Flexible pipe body as claimed in claim 1 wherein each of the radially inner and outer surfaces has a plurality of grooves and the grooves are repeated in the axial direction of the tubular layer to form the corrugations, and the reinforcing element comprises a plurality of hoops of reinforcing material.

5. Flexible pipe body as claimed in any preceding claim wherein the reinforcing element comprises a wound tape.

6. Flexible pipe body as claimed in any preceding claim wherein the reinforcing element comprises a metal or metal alloy.

7. Flexible pipe body as claimed in any preceding claim wherein the reinforcing element has a cross-section shaped to substantially fill the groove of the surface.

8. Flexible pipe body as claimed in claim 7 wherein the reinforcing element extends radially further than the groove of the surface, having at least one laterally extending lobe, wherein, when the pipe body is in a straight formation, the at least one lobe does not meet an adjacent lobe.

9. Flexible pipe body as claimed in any preceding claim wherein the tubular layer comprises a metal, a metal alloy, or a composite material.

10. Flexible pipe body as claimed in any preceding claim, wherein the tubular layer forms a fluid barrier layer, a pressure retaining armour layer, and/or a carcass layer.

11. A method of manufacturing a flexible pipe body, comprising:
providing a tubular layer for forming a collapse resistant layer, the layer comprising corrugations, the layer having a radially inner surface and a radially outer surface, and each of the radially inner and radially outer surfaces having at least one groove provided therein, and
filling the groove of at least one of the radially outer surface and the radially inner surface at least partially with at least one reinforcing element.

12. A method as claimed in claim 11 wherein the step of providing a collapse resistant layer comprises rolling a sheet of material to form a substantially smooth walled tube, and then forming the corrugations using a die.

13. A method as claimed in claim 11 or 12, further comprising forming the corrugations with a single groove helically extending along the length of the tubular layer.

14. A method as claimed in claim 11 or 12, further comprising forming the corrugations with a plurality of grooves helically or perpendicular to the longitudinal axis of the pipe body.
